# EUROPÄISCHE PATENTSCHRIFT

(11) **EP 4 338 879 B1**
(45) Veröffentlichungstag und Bekanntmachung des Hinweises auf die Patenterteilung: **17.12.2025**
(21) Anmeldenummer: 23186201.2
(22) Anmeldetag: 18.07.2023
(51) Int. Cl.: B23K 9/00, B23K 9/173, B23K 9/20, B23K 35/02, B23K 101/18, B23K 101/34, B23K 103/04, F01N 13/14

(54) **VERFAHREN ZUM LOCHNAHTSCHWEISSEN**
METHOD FOR PLUG WELDING
PROCÉDÉ DE SOUDAGE EN BOUCHON

(30) Priorität: 18.08.2022 DE 102022208596
(43) Veröffentlichungstag der Anmeldung: 20.03.2024
(73) Patentinhaber: VOLKSWAGEN AG, 38440 Wolfsburg (DE)
(72) Erfinder: Hesse, Lorenz, 34132 Kassel (DE); Schmitt, Alexander, 34295 Edermünde (DE); Becker, Martin, 34399 Wesertal (DE); Kustov, Evgenij, 34376 Immenhausen (DE)
(74) Vertreter: Massinger, Marco

(56) Entgegenhaltungen:
- EP-A1- 3 748 142
- WO-A1-2018/042680
- GB-A- 865 483
- US-A- 4 929 812

## Beschreibung

Die Erfindung betrifft ein Verfahren zum Lochnahtschweißen nach dem Oberbegriff des Anspruches 1.

Zum Erhalt der Wärme in einem Fahrzeug-Abgassystem und/oder zur Verhinderung von Schäden durch Abstrahlwärme an umliegenden Bauteilen/Objekten werden Abgasanlagen partiell oder komplett isoliert. Diese werden üblicherweise in den letzten Schritten des Fertigungsprozesses von außen auf die Abgasanlage aufgebracht (durch Schweißen, Schrauben oder Klemmen). Beim Schweißen wird häufig ein sehr dünnes Außenblech mittels sehr vieler Mikroschweißpunkte (z.B. alle 10mm ein Schweißpunkt) an den dicken Abgasanlagentrichter verschweißt, was einen hohen Zeitaufwand bedeutet. Eine weitere Schwierigkeit sind geometrische Gegebenheiten, die durch die Isolierung vorgegeben werden und die das Schweißen an prozesstechnisch ungünstigen Lagen (schlechte Zugänglichkeit) erzwingen kann. Außerdem ist die Festigkeit der einzelnen Punkte gering. Das Verschweißen sehr dünner Bleche ist zudem schwierig, da ein zu hoher Energieeintrag zum Abbrand des Bleches führt.

Die Fertigung mit Mikroschweißpunkten weist eine hohe Fertigungszeit, hohe Anforderungen an geometrische Toleranzen der anzubindenden Außenflächen sowie gegebenenfalls eine schlechte Zugänglichkeit beim Verschweißen einzelner Punkte und geringe Festigkeit der einzelnen Punkte auf. Zudem werden spezielle Schweißgeräte benötigt (MAG-Schweißanlagen können nicht verwendet werden). Ein Anschweißen als MAG-Schweißung erfordert bisher hohe Blechdicken (mehr Gewicht, mehr Materialeinsatz, höhere Anforderung an Tiefziehwerkzeuge, steiferes Bauteil mit gegebenenfalls Festigkeitsproblemen durch Wärmeausdehnungsunterschiede).

In einem beispielhaften Verfahren erfolgt ein Lochnahtschweißen, bei dem in einem Schmelzschweißprozess ein Dünnblechteil an ein im Vergleich zum Dünnblechteil materialstarkes Trägerteil gefügt wird.

Aus der CN 208 564 720 U ist eine Wärmeschutzschildanordnung für ein Abgassystem bekannt. Aus der EP 3 748 142 A1 ist eine Baueinheit für ein Strukturbauteil für eine Abgasanlage eines Fahrzeugs bekannt. Aus der US 9 671 056 B2 und aus der CN 207 245 808 U sind weitere Abgasanlagen mit einem wärmeisolierenden Isolierblech bekannt. Die WO 2018/042680 A1 offenbart ein Verfahren zum Lichtbogenpunktschweissen zum Verbinden unterschiedlicher Materialien sowie ein Verbindungshilfselement und eine Schweissverbindung aus unterschiedlichen Materialien. Aus der GB 865 483 A sind Verbesserungen in Bezug auf das Schweißen bekannt.

Die Aufgabe der Erfindung besteht darin, ein Verfahren zum Lochnahtschweißen, und zwar zum Verschweißen eines dünnwandigen Wärmeisolierbleches an einer Fahrzeug-Abgasanlage, bereitzustellen, die im Vergleich zum Stand der Technik in fertigungstechnisch einfacher Weise eine zuverlässige Verbindung zwischen dem Dünnblechteil und dem Trägerteil ermöglicht.

Die Aufgabe ist durch die Merkmale des Anspruches 1 gelöst. Bevorzugte Weiterbildungen der Erfindung sind in den Unteransprüchen offenbart.

Die Erfindung geht von einem Verfahren zum Lochnahtschweißen aus, bei dem in einem Schmelzschweißprozess ein Dünnblechteil an ein im Vergleich zum Dünnblechteil materialstarkes Trägerteil gefügt wird. Gemäß dem Anspruch 1 wird an einer zu schweißenden Fügestelle auf der, dem Trägerteil abgewandten Seite des Dünnblechteils eine lokal begrenzte Materialaufdickung bereitgestellt. Diese schmilzt im Schmelzschweißprozess auf. Nach Abschluss des Schmelzschweißprozesses ist daher die Materialaufdickung stoffschlüssig mit dem Trägerteil verschweißt, und zwar unter Zwischenklemmung des Dünnblechteils. Das Dünnblechteil kann dabei bevorzugt alleine durch die Zwischenklemmung an das Trägerteil gefügt sein. Alternativ dazu kann das Dünnblechteil auch zu einem geringen Ausmaß zusammen mit dem Trägerteil und der lokal begrenzten Materialaufdickung verschweißt sein.

Erfindungsgemäß ist das Trägerteil eine Fahrzeug-Abgasanlagenkomponente (etwa ein Abgasanlagentrichter), während das Dünnblechteil ein Wärme-Isolierblech (zum Beispiel 0,15mm dick) ist. Dieses kann an zum Beispiel drei Stellen an den Abgasanlagentrichter befestigt werden. In den jeweiligen Isolierblechen befinden sich vorgefertigte Löcher (nachfolgend als Vorlöcher bezeichnet). Beim Fügen der Isolierung an den Abgasanlagentrichter der Abgasanlage werden zunächst zum Beispiel 1,5 mm starke Ringscheiben (ähnlich wie eine Unterlegscheibe) von außen auf die Löcher zugeführt und anschließend mit zum Beispiel einer MAG-Lochnahtschweißung an den Trichter angeschweißt. Jede Ringscheibe ist nun stoffschlüssig mit dem Trichter verbunden. Das dünne Isolierungsblech wird dabei mit verschweißt, mindestens jedoch an mehreren Stellen geklemmt. Die zugeführte Scheibe übernimmt die Funktion einer partiellen Aufdickung. Das Abbrennen des dünnen Isolierbleches wird dadurch verhindert.

Im oben skizzierten Anwendungsfall kann eine feste (häufig stoffschlüssige) Verbindung zwischen der Isolierung mit dem sehr dünnem Isolierblech (zum Beispiel ≤0,2mm) und dem Trichter mit bevorzugt nur drei MAG-Lochschweißpunkten hergestellt werden. Das Isolierblech selbst muss keine ausreichende Dicke für eine MAG-Schweißung aufweisen, da das Abschmelzen und Schweißbad mittels der 1,5mm dicken Ringscheibe erreicht wird.

Bei einem nicht von der Erfindung umfassten Vergleichsverfahren, in dem das Dünnblech mit z.B. Mikroschweißpunkten befestigt wird, ist die Festigkeit der einzelnen Punkte gering, so dass sehr viele Punkte benötigt werden (z.B. 30 Punkte), was eine hohe Fertigungszeit und somit Kosten verursacht. Bei anderen Verfahren, wo das Isolierblech mit MAG-Schweißung an den Trichter geschweißt wird, weist das Blech eine deutlich höhere Wandstärke auf (zum Beispiel ≥ 1 mm), damit Abbrand verhindert wird.

Nachfolgend werden wesentliche Aspekte der Erfindung nochmals im Einzelnen hervorgehoben: Erfindungsgemäß ist die lokal begrenzte Materialaufdickung eine Ringscheibe, die als ein separates Bauteil unter Zwischenlage des Dünnblechteils gegen das Trägerteil gepresst wird. Diese kann als ein separates Bauteil auf die zu schweißende Fügestelle mit einer Niederhaltekraft aufgelegt sein. In diesem Fall kann gegebenenfalls ein Niederhalter die Ringscheibe unter Zwischenlage des Dünnblechteils gegen das Trägerteil drücken. Anschließend kann der Schmelzschweißprozess durchgeführt werden. Im Schmelzschweißprozess kann die Ringscheibe an Innenumfang aufschmelzen. Dabei kann der Ringscheiben-Innenquerschnitt mit dem Schweißbad gefüllt werden. Nach Abschluss des Schmelzschweißprozesses ist daher der Ringscheiben-Innenquerschnitt mit einer Schweißlinse gefüllt, die die Ringscheibe stoffschlüssig mit dem Trägerteil verbindet. Im Hinblick auf eine dauerhaft betriebssichere Schweißverbindung ist es bevorzugt, wenn die Ringscheibe und das Trägerteil materialähnlich oder materialidentisch aus schweißgeeignetem Material gefertigt sind, insbesondere aus nichtrostendem Stahl.

Bevorzugt ist das Schmelzschweißverfahren im Gegensatz zu einem Widerstandspunktschweißen mit Schweißzange so ausgelegt, dass nur ein einseitiger Schweißzugang erforderlich ist. Der Schweißzugang kann bevorzugt von der Seite erfolgen, an der die lokal begrenzte Materialaufdickung (das heißt die Ringscheibe) angeordnet ist.

Fertigungstechnisch einfach kann der Schmelzschweißprozess als ein Schutzgasschweißprozess, etwa MAG-Schweißen, realisiert sein. Die beim Schmelzschweißprozess eingesetzte Schweißelektrode kann eine abschmelzende Elektrode sein, deren Material zusammen mit dem Material der lokal begrenzten Materialaufdickung, dem Trägerteil-Material und gegebenenfalls dem Dünnblechteil-Material die Schweißlinse bildet.

Gemäß einer ersten Prozessvariante kann das Dünnblechteil bereits vor Durchführung des Schmelzschweißprozesses mit einem Vorloch bereitgestellt sein. Der Vorloch-Durchmesser kann um ein Übermaß größer bemessen sein als der Innendurchmesser der Ringscheibe. Zudem ist es bevorzugt, wenn das Vorloch und die Ringscheibe zueinander konzentrisch an der zu schweißenden Fügestelle ausgerichtet sind.

In einer alternativen Prozessführung kann das Dünnblech vor Durchführung des Schmelzschweißprozesses ohne Vorloch an der zu schweißenden Fügestelle bereitgestellt sein. In diesem Fall bildet sich das Vorloch während des Schmelzschweißprozesses aufgrund von Abbrand. Nach Vorloch-Bildung kommt im weiteren Prozessverlauf die lokal begrenzte Materialaufdickung in stoffschlüssige Verbindung mit dem Trägerteilmaterial.

In einer konkreten, jedoch nicht beschränkenden Ausführungsvariante kann das Dünnblechteil beispielhaft eine Materialstärke im Bereich von 0,15 mm bis 0,20 mm aufweisen. Die Materialaufdickung kann eine Materialstärke im Bereich von 0,60 mm bis 0,90 mm aufweisen. Zudem kann der Vorloch-Durchmesser im Dünnblechteil beispielhaft in einem Bereich von 7 mm liegen, während der Innendurchmesser der Ringscheibe um ein Untermaß kleiner bemessen ist und zum Beispiel in einem Bereich von 6,4 mm liegen kann.

Erfindungsgemäß ist das Trägerteil eine Fahrzeug-Abgasanlagenkomponente, und zwar ein Abgasanlagentrichter. Das Dünnblechteil ist erfindungsgemäß ein Isolierblech, das die Wärmeabstrahlung von der Abgasanlagenkomponente zu umliegenden Bauteilen isoliert. Das Isolierblech kann dabei Teil einer Isolierung sein, die aus dem Isolierblech und einem Isolierkörper (zum Beispiel eine Fasermatte) besteht.

Nachfolgend sind Ausführungsbeispiele der Erfindung anhand der beigefügten Figuren beschrieben.

Es zeigen:
- Figur 1: eine Abgasanlage mit angeschweißtem Isolierblech;
- Figuren 2 bis 4: Ansichten, anhand derer ein Verfahren zur Herstellung der Schweißverbindung ist; und
- Figur 5: in einer Ansicht entsprechend der Figur 3 ein zweites Ausführungsbeispiel.

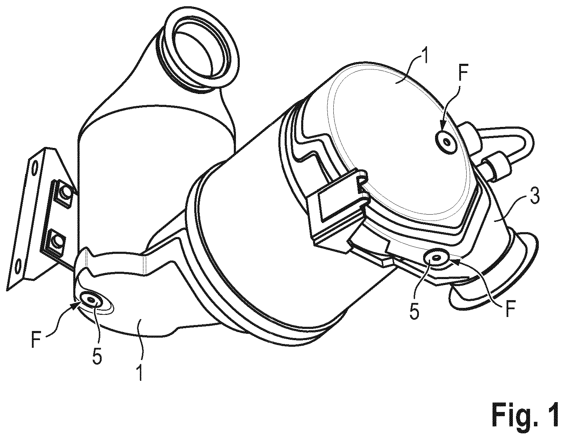

In der Figur 1 ist eine Fahrzeug-Abgasanlage mit einer Abgasanlagenkomponente, insbesondere ein Abgasanlagentrichter, gezeigt, die ein Trägerteil 3 im Sinne der Erfindung bildet, an dem ein Isolierblech wirkendes Dünnblechteil 1 an Schweiß-Fügestellen F befestigt ist. Das Dünnblechteil 1 ist Teil einer Isolierung, die eine Wärmeabstrahlung von der Abgasanlagenkomponente zu umliegenden Bauteilen isoliert.

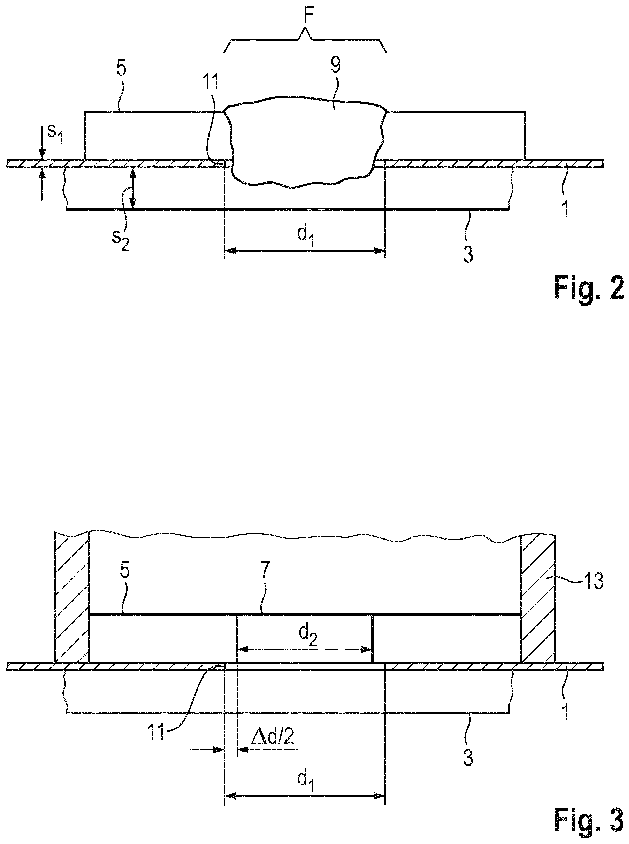

In der Figur 2 ist eine der Schweiß-Fügestellen F in einem Schliffbild dargestellt. In der Schweißverbindung ist das Dünnblechteil 1 an das im Vergleich zum Dünnblechteil 1 materialstarken Trägerteil 3 gefügt. Beispielhaft kann das Dünnblechteil 1 eine Materialstärke s₁ von 0,15 mm aufweisen, während die Materialstärke s₂ des Trägerteils 3 beispielhaft bei 2 mm liegen kann. Wie aus der Figur 1 hervorgeht, ist auf der, dem Trägerteil 3 abgewandten Seite des Dünnblechteils 1 eine Ringscheibe 5 positioniert, deren Ringscheiben-Innenquerschnitt 7 (nur in der Figur 3 gezeigt) mit einer Schweißlinse 9 gefüllt ist. Die Schweißlinse 9 ist einerseits stoffschlüssig an der Ringscheibe 5 angebunden. Andererseits erstreckt sich die Schweißlinse 9 durch ein Vorloch 11 des Dünnblechteils 1 und ist stoffschlüssig an dem Trägerteil-Material angebunden.

In der Figur 1 ist beispielhaft der Vorloch-Durchmesser d₁ derart groß bemessen, dass sich keine direkte Schweißverbindung des Dünnblechteils 1 mit der Schweißlinse 9 ergibt. Alternativ dazu kann jedoch auch das Dünnblechteil 1 auch zu einem geringen Teil stoffschlüssig mit der Schweißlinse 9 verbunden sein. In erster Linie wird jedoch das Dünnblechteil 1 nicht durch eine stoffschlüssige Anbindung gehalten, sondern vielmehr durch eine Verklemmung zwischen der Ringscheibe 5 und dem Trägerteil 3.

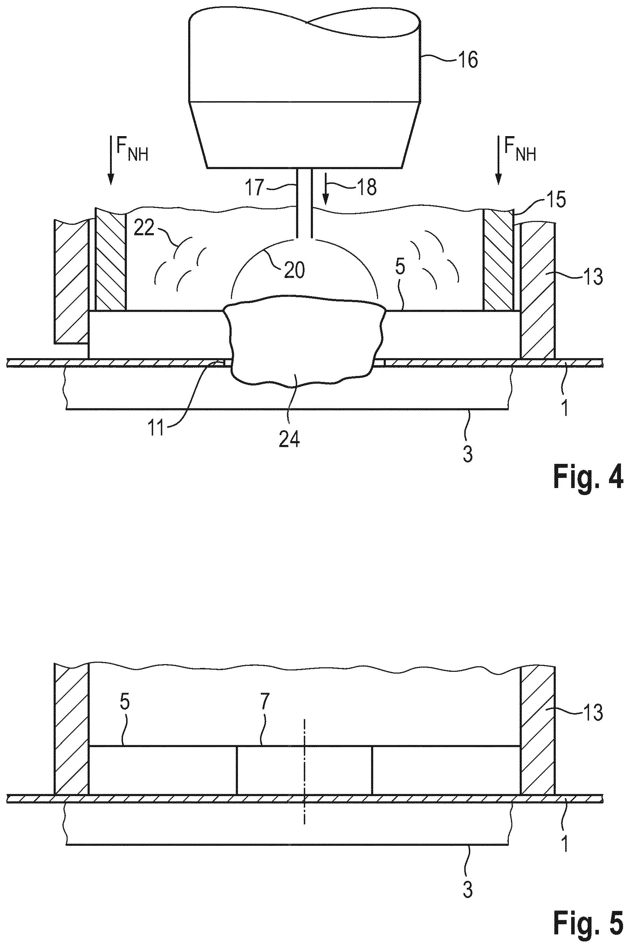

Nachfolgend werden anhand der Figuren 3 und 4 Prozessschritte zur Herstellung der in der Figur 1 gezeigten Schweißverbindung beschrieben: Demnach wird zunächst in der Figur 3 die Ringscheibe 5 mit Hilfe einer Vereinzelungseinheit 13 etwa durch eine Druckluft-Zuführung (alternativ durch Schwerkraftwirkung oder sonstiges) auf der zu schweißenden Fügestelle F positioniert. Anschließend wird die Ringscheibe 5 mit Hilfe eines Niederhalters 15 (Figur 4) unter Zwischenlage des Dünnblechteils 1 gegen das Trägerteil 3 gepresst. In diesem Zustand startet ein Schmelzschweißprozess, der bevorzugt als ein MAG-Schweißprozess realisiert ist. Für den Schmelzschweißprozess wird gemäß der Figur 4 eine Schweißdüse 16 zur Fügestelle F geführt. Die Schweißdüse 16 weist eine Elektrode-Zuführung 18 auf, mittels der eine abschmelzende Schweißelektrode 17 in Schutzgasatmosphäre zur Fügestelle F geführt wird. Dabei schmilzt unter Schutzgasatmosphäre 22 sowie unter Bildung eines Lichtbogens 20 die Ringscheibe 5 am Innenumfang auf. Das sich bildende flüssige Schweißgut 24 ist von der Ringscheibe 5 umgrenzt. Die Schweißlinse 9 ergibt sich dabei aus dem Material der Ringscheibe 5, dem Elektroden-Material, dem Trägerteil-Material sowie gegebenenfalls dem Dünnblechteil-Material.

Es ist hervorzuheben, dass die Erfindung nicht auf das in den Figuren gezeigte Ausführungsbeispiel beschränkt ist. Alternativ zu den Figuren kann die Ringscheibe 5 auch bereits an das Dünnblechteil 1 vorgefügt werden. In diesem Fall müsste die Ringscheibe 5 nicht mehr mittels einer Zuführeinheit dem Dünnblechteil 1 zugeführt werden.

In den Figur 2, 3 und 4 ist der Innenumfang der Ringscheibe 5 konzentrisch zum Vorloch 11 des Dünnblechteils 1 positioniert. Der Vorloch-Durchmesser d₁ ist um ein Übermaß Δd/2 (Figur 3) größer bemessen als der Ringscheiben-Innendurchmesser d₂ (Figur 3).

In der Figur 5 ist in eine Ansicht entsprechend der Figur 3 ein zweites Ausführungsbeispiel gezeigt. Im zweiten Ausführungsbeispiel wird dieselbe Prozessabfolge wie im obigen ersten Ausführungsbeispiel durchgeführt. Von daher wird auf die Vorbeschreibung verwiesen. Im Unterschied zur ersten Prozessführung (Figuren 2 bis 4) wird gemäß der Figur 5 das Dünnblechteil 1 ohne Vorloch 11 an der zu schweißenden Fügestelle F bereitgestellt. Das Vorloch 11 bildet sich erst zu Beginn des Schmelzschweißprozesses aufgrund von Abbrand. Nach dieser Vorloch-Bildung kann sich im weiteren Schweißprozessverlauf die Schweißlinse 9 bilden, die stoffschlüssig sowohl an dem Trägerteil 3 als auch an dem Innenumfang der Ringscheibe 5 angebunden ist.

### Bezugszeichenliste

- 1: Dünnblechteil
- 3: Trägerteil
- 5: lokal begrenzte Materialaufdickung bzw. Ringscheibe
- 7: Ringscheiben-Innenquerschnitt
- 9: Schweißlinse
- 11: Vorloch
- 13: Vereinzelungseinheit
- 15: Niederhalter
- 17: Schweißelektrode
- 18: Elektrodenzuführung
- 20: Lichtbogen
- 22: Schutzgasatmosphäre
- 24: flüssiges Schweißgut
- F: Fügestelle
- s₁: Materialstärke des Dünnblechteils
- s₂: Materialstärke des Trägerteils
- d₁: Vorlochdurchmesser
- d₂: Ringscheiben-Innendurchmesser
- Δd/2: Übermaß

## Patentansprüche

1. Verfahren zum Lochnahtschweißen, bei dem in einem Schmelzschweißprozess ein Dünnblechteil (1) an ein im Vergleich zum Dünnblechteil (1) materialstarkes Trägerteil (3) gefügt wird, wobei an einer zu schweißenden Fügestelle (F) auf der dem Trägerteil (3) abgewandten Seite des Dünnblechteils (1) eine lokal begrenzte Materialaufdickung (5) bereitgestellt wird, die im Schmelzschweißprozess zumindest teilweise aufschmilzt und nach dem Schmelzschweißprozess stoffschlüssig mit dem Trägerteil (3) verschweißt ist, und zwar insbesondere unter Zwischenklemmung des Dünnblechteils (1), wobei das Trägerteil (3) eine Abgasanlagenkomponente, und zwar ein Abgasanlagentrichter, ist, und wobei das Dünnblechteil (1) ein Isolierblech ist, um die Wärmeabstrahlung von der Abgasanlagenkomponente zu umliegenden Bauteilen zu isolieren, **dadurch gekennzeichnet, dass** die lokal begrenzte Materialaufdickung (5) eine Ringscheibe ist, die als ein separates Bauteil unter Zwischenlage des Dünnblechteils (1) gegen das Trägerteil (3) gepresst wird.

2. Verfahren nach Anspruch 1, **dadurch gekennzeichnet, dass** das Dünnblechteil (1) alleine durch die Zwischenklemmung an das Trägerteil (3) gefügt ist, oder dass das Dünnblechteil (1) zu einem geringen Teil zusammen mit dem Trägerteil (3) und der lokal begrenzten Materialaufdickung (5) verschweißt ist.

3. Verfahren nach Anspruch 1 oder 2, **dadurch gekennzeichnet, dass** im Schmelzschweißprozess die Ringscheibe (5) am Innenumfang aufschmilzt und/oder der Ringscheiben-Innenquerschnitt (7) nach dem Schmelzschweißprozess mit einer Schweißlinse (9) gefüllt ist, die die Ringscheibe (5) stoffschlüssig mit dem Trägerteil (3) verbindet, und/oder dass die Ringscheibe (5) und das Trägerteil (3) materialähnlich oder materialidentisch aus schweißgeeignetem Material, insbesondere nichtrostendem Stahl, gefertigt sind.

4. Verfahren nach einem der vorhergehenden Ansprüche, **dadurch gekennzeichnet, dass** im Schmelzschweißverfahren nur ein einseitiger Schweißzugang erfolgt, und zwar von der Seite, an der die lokal begrenzte Materialaufdickung (5) angeordnet ist.

5. Verfahren nach einem der vorhergehenden Ansprüche, **dadurch gekennzeichnet, dass** der Schmelzschweißprozess ein Schutzgasschweißprozess, etwa MAG-Schweißen, ist, und/oder dass die beim Schmelzschweißprozess eingesetzte Schweißelektrode (17) eine abschmelzende Elektrode ist, deren Material zusammen mit dem Material der lokal begrenzten Materialaufdickung (5), dem Trägerteil-Material und gegebenenfalls dem Material des Dünnblechteils (1) die Schweißlinse (9) bildet.

6. Verfahren nach einem der vorhergehenden Ansprüche, **dadurch gekennzeichnet, dass** vor Durchführung des Schmelzschweißprozesses das Dünnblechteil (1) mit einem Vorloch (11) bereitgestellt wird, und dass insbesondere der Vorloch-Durchmesser (d₁) um ein Übermaß (Δd/2) größer bemessen ist als der Innendurchmesser (d₂) der Ringscheibe (5), und/oder dass das Vorloch (11) und die Ringscheibe (5) konzentrisch zueinander an der zu schweißenden Fügestelle (F) positioniert sind.

7. Verfahren nach einem der Ansprüche 1 bis 5, **dadurch gekennzeichnet, dass** vor Durchführung des Schmelzschweißprozesses das Dünnblechteil (1) ohne Vorloch (11) an der zu schweißenden Fügestelle (F) bereitgestellt wird, und dass sich während des Schmelzschweißprozesses aufgrund von Abbrand das Vorloch (11) bildet, so dass im weiteren Prozessverlauf die lokal begrenzte Materialaufdickung (5) in stoffschlüssige Verbindung mit dem Trägerteilmaterial kommt.

## Claims

1. Method for plug welding, in which, in a fusion welding process, a thin sheet metal part (1) is joined to a carrier part (3) which is thicker in material than the thin sheet metal part (1), a locally delimited material thickening (5) being provided at a joint (F) to be welded, on the side of the thin sheet metal part (1) facing away from the carrier part (3), which material thickening is at least partially melted in the fusion welding process and is integrally welded to the carrier part (3) after the fusion welding process, in particular with the thin sheet metal part (1) being clamped therebetween, the carrier part (3) being an exhaust system component, namely an exhaust system funnel, and the thin sheet metal part (1) being an insulating sheet in order to insulate the heat radiation from the exhaust system component to surrounding elements, **characterized in that** the locally delimited material thickening (5) is an annular disk which is pressed against the carrier part (3) as a separate element with the thin sheet metal part (1) interposed therebetween.

2. Method according to claim 1, **characterized in that** the thin sheet metal part (1) is joined to the carrier part (3) solely by means of the intermediate clamping, or **in that** the thin sheet metal part (1) is welded to a small extent to both the carrier part (3) and the locally delimited material thickening (5).

3. Method according to claim 1 or 2, **characterized in that** in the fusion welding process, the annular disk (5) melts on the inner circumference and/or the annular disk inner cross section (7) is filled with a weld nugget (9) after the fusion welding process, which weld nugget integrally bonds the annular disk (5) to the carrier part (3), and/or **in that** the annular disk (5) and the carrier part (3) are made identically or similarly in terms of material from weldable material, in particular stainless steel.

4. Method according to any of the preceding claims, **characterized in that** in the fusion welding process, only one-sided weld access takes place, namely from the side on which the locally delimited material thickening (5) is arranged.

5. Method according to any of the preceding claims, **characterized in that** the fusion welding process is a gas metal arc welding process, such as MAG welding, and/or **in that** the welding electrode (17) used in the fusion welding process is a consumable electrode, the material of which, together with the material of the locally delimited material thickening (5), the carrier part material and optionally the material of the thin sheet metal part (1), forms the weld nugget (9).

6. Method according to any of the preceding claims, **characterized in that** before carrying out the fusion welding process, the thin sheet metal part (1) is provided with a pilot hole (11), and **in that** in particular the pilot hole diameter (d₁) is dimensioned to be larger than the inner diameter (d₂) of the annular disk (5) by an oversize (Δd/2), and/or **in that** the pilot hole (11) and the annular disk (5) are positioned concentrically with respect to one another at the joint (F) to be welded.

7. Method according to any of claims 1 to 5, **characterized in that** before carrying out the fusion welding process, the thin sheet metal part (1) is provided without a pilot hole (11) at the joint (F) to be welded, and **in that** during the fusion welding process, the pilot hole (11) is formed due to melting loss, such that in the further course of the process, the locally delimited material thickening (5) becomes integrally bonded to the carrier part material.

## Revendications

1. Procédé pour le soudage en bouchon, dans lequel une pièce en tôle mince (1) est assemblée, dans un processus de soudage par fusion, avec une pièce de support (3) dont le matériau est plus épais que celui de la pièce en tôle mince (1), dans lequel une surépaisseur de matériau délimitée localement (5) est fournie à un point d'assemblage (F) à souder sur le côté de la pièce en tôle mince (1) opposé à la pièce de support (3), laquelle surépaisseur fond au moins partiellement lors du processus de soudage par fusion et est soudée par liaison de matière à la pièce de support (3) après le processus de soudage par fusion, et ce en particulier avec serrage intermédiaire de la pièce en tôle mince (1), dans lequel la pièce de support (3) est un composant de système d'échappement, et plus précisément un entonnoir de système d'échappement, et dans lequel la pièce en tôle mince (1) est une tôle isolante afin d'isoler le rayonnement thermique du composant de système d'échappement vers les composants environnants, **caractérisé en ce que** la surépaisseur de matériau délimitée localement (5) est un disque annulaire pressé contre la pièce de support (3) en tant qu'élément séparé avec interposition de la pièce en tôle mince (1).

2. Procédé selon la revendication 1, **caractérisé en ce que** la pièce en tôle mince (1) est assemblée avec la pièce de support (3) uniquement par le serrage intermédiaire, **ou en ce que** la pièce en tôle mince (1) est conjointement soudée, pour une petite partie, à la pièce de support (3) et à la surépaisseur de matériau délimitée localement (5).

3. Procédé selon la revendication 1 ou 2, **caractérisé en ce que,** lors du processus de soudage par fusion, le disque annulaire (5) fond sur la circonférence intérieure et/ou la section transversale intérieure de disque annulaire (7) est remplie, après le processus de soudage par fusion, d'une lentille de soudure (9) qui relie le disque annulaire (5) à la pièce de support (3) par liaison de matière, **et/ou en ce que** le disque annulaire (5) et la pièce de support (3) sont fabriqués dans un matériau similaire ou identique en matériau approprié au soudage, en particulier en acier inoxydable.

4. Procédé selon l'une des revendications précédentes,
**caractérisé en ce que,** dans le procédé de soudage par fusion, seul un accès de soudage d'un côté est effectué, et plus précisément du côté sur lequel est disposé la surépaisseur de matériau délimitée localement (5).

5. Procédé selon l'une des revendications précédentes,
**caractérisé en ce que** le processus de soudage par fusion est un processus de soudage sous protection gazeuse, par exemple un soudage MAG,
**et/ou en ce que** l'électrode de soudure (17) utilisée lors du processus de soudage par fusion est une électrode fusible dont le matériau forme, conjointement avec le matériau de la surépaisseur de matériau délimitée localement (5), le matériau de pièce de support et éventuellement le matériau de pièce en tôle mince (1), la lentille de soudure (9).

6. Procédé selon l'une des revendications précédentes,
**caractérisé en ce que,** avant la réalisation du processus de soudage par fusion, la pièce en tôle mince (1) est fournie avec un préperçage (11), **et en ce que,** en particulier, le diamètre de préperçage (d₁) est dimensionné plus grand d'une surmesure (Δd/2) que le diamètre intérieur (d₂) du disque annulaire (5),
**et/ou en ce que** le préperçage (11) et le disque annulaire (5) sont positionnés de manière concentrique l'un par rapport à l'autre sur le point d'assemblage (F) à souder.

7. Procédé selon l'une des revendications 1 à 5, **caractérisé en ce que,** avant la réalisation du processus de soudage par fusion, la pièce en tôle mince (1) est fournie sans préperçage (11) au niveau du point d'assemblage (F) à souder, **et en ce que** le préperçage (11) se forme pendant le processus de soudage par fusion en raison d'une combustion de sorte que, dans la suite du processus, la surépaisseur de matériau délimitée localement (5) vient en liaison par matière avec le matériau de pièce de support.
